(19) Europäisches Patentamt
European Patent Office
Office européen des brevets

(11) **EP 4 578 734 A1**

(12) **EUROPEAN PATENT APPLICATION**

(43) Date of publication:
**02.07.2025 Bulletin 2025/27**

(51) International Patent Classification (IPC):
**B60Q 1/26** *(2006.01)* **B60R 1/12** *(2006.01)*

(21) Application number: **23383389.6**

(22) Date of filing: **27.12.2023**

(52) Cooperative Patent Classification (CPC):
**B60Q 1/2665; B60R 1/1207**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ficosa Automotive, S.L.U.**
**08028 Barcelona (ES)**

(72) Inventor: **RUIZ ORTEGA, Nestor**
**08232 Viladecavalls (ES)**

(74) Representative: **ZBM Patents - Zea, Barlocci & Markvardsen**
**Rambla de Catalunya, 123**
**08008 Barcelona (ES)**

(54) **BLIND SPOT INDICATOR ASSEMBLY FOR A MOTOR VEHICLE, METHOD FOR ASSEMBLING A BLIND SPOT INDICATOR ASSEMBLY, AND REAR-VIEW MIRROR COMPRISING SAID BLIND SPOT INDICATOR ASSEMBLY**

(57) The blind spot indicator assembly 100 comprises a housing 110 including a first side having an aperture 145 closed by a lens assembly 170 and a cavity 120 with an interior surface. A printed circuit board (PCB) 180 has at least two connection pins 200 extending laterally such that when not protruding outward an edge of the PCB 180, a longitudinal dimension $d_1$ of the aperture 145 is equal to or greater than the longitudinal dimension $d_3$ of the PCB 180, and when connection pins 200 protrude outward an edge of the PCB 180, the longitudinal dimension $d_1$ of aperture 145 is equal to or greater than a total dimension $d_6$ comprising the longitudinal dimension $d_3$ of the of the PCB 180 plus a projecting distance $d_4$ the connection pins 200 project beyond the longitudinal dimension $d_3$ of the of the PCB 180.

FIG. 1

EP 4 578 734 A1

**Description**

TECHNICAL FIELD

The present disclosure relates to indicator assemblies intended to warn a motor vehicle driver that an object, such as another vehicle, is within a blind spot or blind area.

BACKGROUND

A blind spot or area is a lateral zone near the motor vehicle where the driver has no suitable vision when looking in the rear-view mirrors.

Blind spot indicators are known based on sensors and optical elements that identify when objects enter a blind spot or zone that are capable of alerting the driver that the blind spot is now being occupied by an object, such as for example a vehicle in the adjacent lane.

One example of a rear-view mirror assembly having a blind spot indicator for motor vehicles is disclosed in US9663027 filed in the name of the same applicant of the present application. The rear-view mirror assembly comprises a reflective element attached to a clamping plate, and a watertight illumination module attached to the reflective element. A printed circuit board is arranged in an inner cavity of the watertight illumination at an angle to the clamping plate. At least one light emitting diode is provided on the printed circuit board. A protective case for the watertight illumination module has a metalized and textured surface in its interior. A first side of the printed circuit board rests on the watertight illumination module and a second side opposite the first side does not rest on the watertight illumination module, with the printed circuit board. The light emitted by the light emitting diodes bounces on the metalized surface of the protective case emitting light indirectly passing through the surface of the reflecting element through its opening.

US9754489 and US10614719 refer to mirror reflective element sub-assemblies for motor vehicle exterior rear-view mirrors comprising mirror reflective element, a mirror back plate, and a blind zone indication module. In US9754489, the module includes a housing, a circuit board and a light source and is disposed at an aperture formed through the back plate. The circuit board includes circuitry and electrically conductive terminals in electrical connection with circuitry of the circuit board. The electrically conductive terminals extend into a connector portion of the housing. The connector portion is configured to connect to a connector of a wire harness of the exterior rear-view mirror assembly. In US10614719, the module is attached at the rear side of the mirror reflective element via an aperture of the mirror back plate and it also includes a housing for receiving the circuit element and the at least one light emitting diode therein. The housing is received in a rear side of the mirror back plate. Electrically conductive terminals are provided in the circuit element connected therewith and received at a connector portion of the housing to connect to a wire harness of the rear-view mirror assembly.

Although such blind spot indicators enhance driving safety, it has been found that a problem exists that illumination is partially directed on directions different from the driver. There still remains a need for blind spot indicators in which the illumination on users different from the driver can be efficiently avoided with reduced costs in particular assembly costs.

SUMMARY

The present disclosure provides a blind spot indicator assembly for a motor vehicle for warning of the presence of another vehicle or object in the vicinity. The present blind spot indicator assembly has been found to address the above issues in prior art devices while, at the same time, provides further significant advantages.

The present blind spot indicator assembly may be, for example, a visual indicator to show the driver that another vehicle or object has been detected. The present disclosure further relates to a rear-view mirror assembly for motor vehicles including such blind spot indicator assembly.

The blind spot indicator assembly for motor vehicles disclosed herein is a one single unit. One single unit refers herein to an assembly whose elements do not belong to or are not shared with other elements different than the own blind spot indicator assembly. The present blind spot indicator assembly comprises a housing that includes a first side having an aperture defined by a longitudinal dimension. The housing of the blind spot indicator assembly is also provided with an interior cavity that is defined by an interior surface.

A lens assembly is also arranged to close the aperture of the housing. A printed circuit board (PCB) having a longitudinal dimension is also provided. The PCB serves the purpose of supporting one or more light sources as well as required circuitry. The PCB has a first side and a second, opposite side. At least two connection pins are arranged extending laterally on the first side of the PCB. The PCB is preferably arranged between the connection pins and the lens assembly.

The arrangement is such that when said connection pins of the PCB do not protrude outward an edge of the PCB, the longitudinal dimension of the aperture is equal to or greater than the longitudinal dimension of the printed circuit board, and when said connection pins of the PCB protrude outward an edge of the PCB, said longitudinal dimension of the aperture is equal to or greater than a total dimension that comprises the longitudinal dimension of the printed circuit board plus a projecting distance the connection pins project beyond the longitudinal dimension of the printed circuit board.

Thus, when the connection pins do not protrude outward an edge of the PCB, then:

$$d_1 \geq d_3;$$

and when the connection pins protrude outward an edge of the PCB, then:

$$d_1 \geq d_6$$

wherein:

$d_1$ is a longitudinal dimension of the aperture of the housing;
$d_3$ is a longitudinal dimension of the PCB;
$d_4$ is a projecting distance the connection pins project beyond $d_3$; and
$d_6 = d_3 + d_4$

The housing may comprise a first portion and a second portion. The first portion of the housing comprises the above-mentioned aperture in the housing, and the PCB is placed on said first portion. The second portion of the housing extends laterally from the first portion of the housing. The second portion of the housing is configured to receive at least a first portion of a connector to be plugged into the connection pins of the PCB.

Said first portion of the housing is preferably configured to receive at least a length of the connector when it is plugged into the connection pins of the PCB.

The housing preferably includes a projection in said first portion. The projection is arranged extending from the interior surface towards the aperture of the housing. The projection of the housing is formed at a length apart from the second portion of the housing for acting as an end stop for insertion of the connector.

Said length of the connector that can be inserted within the first portion of the housing may be at least 3 mm. Thus, if $d_2$ is a length of the connector plugged into the connection pins, then $d_2 \geq 3$ mm. Furthermore, $d_7 \geq 5$ mm, preferably $\geq 5.5$ mm, and optimally $d_7 \geq 6$ mm, with $d_7$ being a length corresponding to said length $d_2$ including a distance to the sealing means receiving portion. On the other hand, the connector may be at least 10 mm long.

The second portion of the housing is optimally arranged spaced apart from the lens assembly. Still in other examples, said second portion of the housing is arranged flush with the lens assembly. In advantageous examples, the second portion of the housing includes a sealing means receiving portion. Said sealing means receiving portion is intended for receiving a sealing means provided in the connector. The sealing means receiving portion is arranged extending along a length on an interior surface of the second portion to contact the connector when inserted within the second portion. In one non-limiting example, said length of the sealing portion may be at least 2 mm, preferably, 3 mm or more. Other values are not ruled out. Further, the second portion of the housing may be provided with a connector engaging portion for axially retaining a connector when inserted therein.

The present blind spot indicator assembly may be further provided with a double side adhesive tape arranged in contact both with a second side of the printed circuit board and the lens assembly.

A blind spot indicator assembly is also disclosed herein including a connector to be plugged into connection pins of the PCB. The connector has a first portion intended to be passed through the second portion of the housing and to be received into the first portion of the housing. The connector has a second portion received in the corresponding second portion of the housing. Said first portion of the connector may be at least 3 mm long. In other examples, the connector may be at least 10 mm long with 3 mm long sealing means in the second portion of the connector.

A method for assembling a blind spot indicator assembly is disclosed herein. Said method may be applied to the above-mentioned blind spot indicator assembly or to any blind spot indicator assembly comprising a housing with an interior cavity and an aperture, a lens assembly arranged to close the aperture, and a printed circuit board (PCB) including at least two connection pins.

The method comprises arranging the housing of the blind spot indicator assembly with the aperture of the housing perpendicular to the direction of gravity and further away to the ground than a second side of the housing opposite the first side of the housing, and with the second side of the PCB further away to the ground than the first side of the PCB.

The method further comprises arranging the PCB within the aperture of the housing and arranging the lens assembly closing the aperture of the housing.

The method may further comprise providing a double side adhesive tape on the second side of the PCB and on an external surface of the aperture of the housing.

A step may be performed of attaching a double side adhesive tape to the lens assembly and attaching the lens assembly to the housing and the PCB.

A compression pressure may be applied to the housing and the lens assembly in an assembly direction, at least substantially perpendicular to lens assembly, or in an assembly direction.

A rear-view mirror assembly for motor vehicles is also disclosed herein. The mirror assembly comprises a mirror head and a support arm for the attachment of the rear-view mirror to the vehicle. The mirror head comprises a mirror housing, a reflective mirror sub-assembly, and a reflective mirror regulator for adjusting the orientation of said reflective mirror. The reflective mirror sub-assembly comprises the reflective mirror and a back plate to which the reflective mirror is attached.

The reflective mirror sub-assembly further comprises a blind spot indicator assembly as described above, and the rear-view mirror assembly further comprises a connector to be inserted into the second portion of the housing of the blind spot indicator assembly. Said connector is configured for electrical connection to the connection pins of the printed circuit board for powering supply to at least one or more light sources in the printed circuit board.

As stated above, the glass sub-assembly comprises the blind spot indicator assembly, the back plate, and also a reflective mirror. The reflective mirror has a first surface and a second surface. The second surface is located closer to the back plate than the first surface, in operation. Preferably, the glass sub-assembly also comprises a heater placed on the second surface of the reflective mirror. More preferably, the back plate and the blind spot indicator assembly are attached directly to the heater. Optimally, the back plate and the blind spot indicator assembly are attached by adhesive means.

The back plate is shaped for allowing the blind spot indicator assembly being placed between the back plate and the reflective mirror or flush with the back plate in relation to the reflective mirror. Preferably, the back plate is shaped to match the blind spot indicator assembly with or without interaction between them. Preferably, in operation, one side of the PCB is comprised on the backplate thickness close to a side thereof. The above features advantageously allow all the parts of the blind spot indicator assembly to be assembled in the same axis in an automatic process.

BRIEF DESCRIPTION OF THE DRAWINGS

Non-limiting examples of the present disclosure will be described in the following, with reference to the appended drawings, in which:

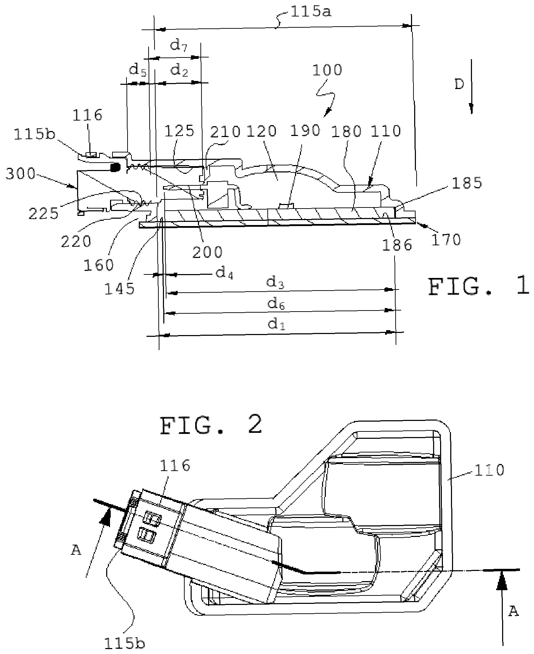

> Figure 1 is a sectional view of a rear-view mirror assembly for motor vehicles including a blind spot indicator assembly;
> Figure 2 is a top plan view of the rear-view mirror assembly in figure 1;
> Figure 3a is a sectional view of a rear-view mirror assembly showing the blind spot indicator assembly with back plate and reflective mirror in a first example;
> Figure 3b is a sectional view of a rear-view mirror assembly showing the blind spot indicator assembly with back plate and reflective mirror in a second example; and
> Figure 4 is an exploded view of a rear-view mirror assembly.

DETAILED DESCRIPTION OF EXAMPLES

In the non-limiting example shown in the figures, a blind spot indicator assembly 100 is shown. The blind spot indicator assembly 100 is intended for warning of the presence of another vehicle or object in the vicinity of a motor vehicle. The blind spot indicator assembly comprises a housing 110.

Also, a rear-view mirror assembly 10 is shown.

The rear-view mirror assembly 10 further includes a connector 300 to be inserted into the housing 110 of the blind spot indicator assembly 100 for electrical connection to connection pins 200 of a printed circuit board, PCB, 180 for powering supply to at least one or more light sources 190 therein as it will be described in detail below.

The housing 110 of the blind spot indicator assembly 100 has a first side with an aperture 145 extending along a longitudinal dimension $d_1$. The housing 110 has an interior surface 125 defining an interior cavity.

In use, the above-mentioned aperture 145 of the housing 110 is closed by a lens assembly 170. As stated above, a printed circuit board, PCB, 180 is provided for powering supply to said light sources 190. The PCB 180 has a longitudinal dimension $d_3$.

Two connection pins 200 are arranged extending laterally on a first side 185 of the PCB 180. In the example shown, the connection pins 200 are at least 5 mm long. The PCB 180 is arranged between said connection pins 200 and the lens assembly 170. A double side adhesive tape is provided in contact with an opposite, second side 186 of the PCB 180 and the lens assembly 170.

In a first condition when the connection pins 200 of the PCB 180 do not protrude outward an edge of the PCB 180, the longitudinal dimension $d_1$ of the aperture 145 is equal to or greater than said longitudinal dimension $d_3$ of the PCB 180, that is, when the connection pins do not protrude outward an edge of the PCB, $d_1 \geq d_3$.

In a second condition when the connection pins 200 of the PCB 180 protrude outward an edge of the PCB 180, the longitudinal dimension $d_1$ of the aperture 145 is equal to or greater than a total dimension $d_6$ that comprises the longitudinal dimension $d_3$ of the PCB 180 plus a projecting distance $d_4$ the connection pins 200 project beyond the longitudinal dimension $d_3$ of the PCB 180. Thus, when the connection pins protrude outward an edge of the PCB, then $d_1 \geq d_6$ wherein $d_6 = d_3 + d_4$.

The housing 110 comprises a first portion 115a on which the PCB 180 is placed. The housing 110 further comprises a second portion 115b extending laterally from said first portion 115a. The second portion 115b of the housing 110 is configured to receive the above mentioned connector 300. In use, the connector 300 is plugged into the connection pins 200 of the PCB 180. In the present example, the connector 300 is 10 mm long.

The connector 300 has a first portion and a second portion. The first portion of the connector 300 is intended to be passed through the second portion 115b of the housing 110 and to be received into the first portion 115a of the housing. The second portion of the connector 300 is received in said second portion 115b of the housing 110.

The housing 110 also includes a projection 210 extending from the interior surface 125 of the housing towards the aperture 145 of said housing 110. Said projection 210 is formed at a length apart from the second portion 115b of the housing 110. The projection 210 is configured as an end stop for insertion of the connector 300.

The connector 300 can be inserted a length $d_2$ within the first portion 115a of the housing 110 when plugged into the connection pins 200 of the PCB 180. In the present example, $d_2 \geq 3$ mm. Also in this example, $d_7 \geq 5$ mm, preferably $d_7 \geq 5.5$ mm, and optimally $d_7 \geq 6$ mm, with $d_7$ being a length corresponding to length $d_2$ including a distance to a sealing means receiving portion 220 that will be described below.

The second portion 115b of the housing 110 is arranged spaced apart from the lens assembly 170. Said second portion 115b of the housing 110 includes in the present example a sealing means receiving portion 220 configured for receiving a suitable sealing means 225 that are provided in said second portion of the connector 300. Said sealing means receiving portion 220 extends along a length $d_5 \geq 2$ mm, on an interior surface of the second portion 115b of the housing 110 to contact the connector 300 when inserted within the second portion 115b of the housing 110. Said second portion 115b of the housing 110 has a connector engaging portion 116. The connector engaging portion 116 axially retains the connector 300 when inserted therein.

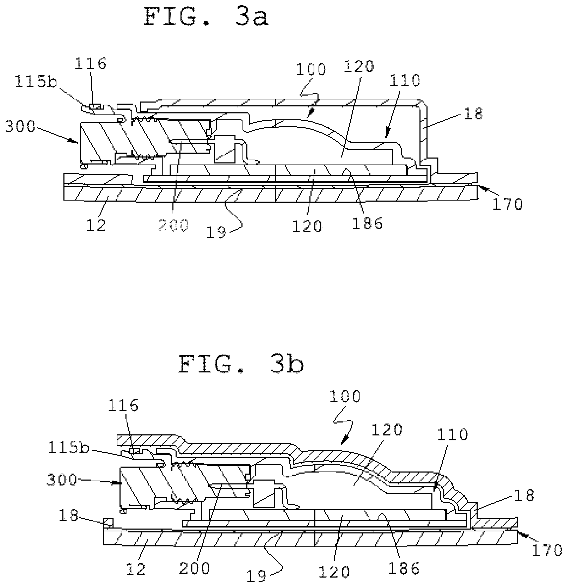

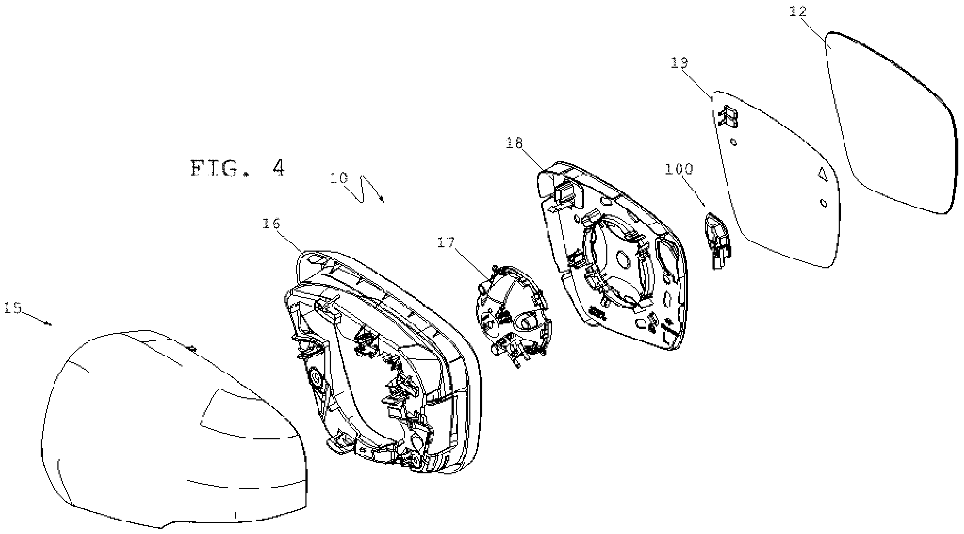

Reference is made to figures 3a, 3b where a reflective mirror sub-assembly is shown. The rear-view mirror assembly 10 comprises a mirror head, illustrated in detail in the exploded view of figure 4 of the drawings, and a support arm, not shown, for the attachment of the rear-view mirror assembly 10 to the vehicle.

The mirror head comprises a mirror housing 15, preferably for receiving therein a mirror frame 16, a reflective mirror sub-assembly, and a reflective mirror regulator 17 for adjusting the orientation of said reflective mirror 12. The reflective mirror sub-assembly further comprises a reflective mirror 12 and a back plate 18 to which the reflective mirror 12 is attached. In the example shown in figure 3a, a portion of the back plate 18 is arranged under the second portion 115b of the housing 110 while in the example shown in figure 3b, any portion of the back plate 18 is arranged under the second portion 115b of the housing 110. As shown in the example of figure 3b, a lower part of the back plate 18 extends outwards from an end portion of the blind spot indicator assembly 100. Therefore, there is no portion of the backplate 18 between the blind spot indicator assembly 100 and the mirror 12, as a result of which the assembly of the blind spot indicator assembly 100 is possible along a single axis, that is, an assembly direction D, with the blind spot indicator assembly 100 abutting a heater 19, that is described below, with the backplate 18 arranged on the blind spot indicator assembly 100 and also abutting said heater 19.

As sated above, a heater 19 is provided including a heating element which in use acts as resistive heating of the reflective mirror 12 as an electric current flows through. The heater 19 includes an adhesive for attaching the reflective mirror 12 to the back plate 18. A blind spot indicator assembly 100 is in turn attached to said heater 19. The back plate 18 is shaped for allowing the blind spot indicator assembly 100 to be placed flush with back plate 18 in relation to the reflective mirror 12. In this case the back plate 18 is configured for receiving a rear portion of the blind spot indicator assembly 100 which extends towards the back plate 18. Further, the back plate 18 is shaped to match the blind spot indicator assembly 100 without interaction between them.

As shown in figures 3a and 3b, further, in use, at least one side 186 of the PCB is comprised on the backplate thickness close to a side thereof that is attached to the heater 19.

In these examples of figures 3a, 3b, an outermost side of the lens assembly 170 located furthest away from the housing 110 is arranged, in use, flush with the surface of the back plate 18 that is closest to the reflective mirror 12. In particular, at least one side 185, 186 of the PCB 180, as explained above, is comprised on the backplate thickness that includes the surface that is located closest to the reflective mirror 12 of the back plate 18. The back plate 18 also includes an opening on its surface that is closest to the reflective mirror 12. Said opening is greater than the dimension of the blind spot indicator assembly 100 in any direction. For that reason, the reflective mirror sub-assembly could be assembled in only one direction, fixing the heater 19 to the reflective mirror 12, and after that, fixing in the same direction the back plate 18 and blind spot indicator assembly 100 to the heater 19.

A portion of the blind spot indicator assembly 100 is arranged furthest from the reflective mirror 12 in relation to the portion of the back plate 18 that comprises the closest surface to the reflective mirror 12. At least 50-75-100% of the blind spot indicator assembly 100 in a plane perpendicular to the reflective mirror 12 is between the back plate 18 and the reflective mirror 12.

The blind spot indicator assembly 100 is received within said opening of the back plate 18. In this respect, in use, a gap between the blind spot indicator assembly 100 and the back plate 18 in a direction towards the reflective mirror 12 is defined between the second portion 115b of the housing 110 and the back plate 18 for facilitating the insertion of the connector 300 to the blind spot indicator assembly 100.

The blind spot indicator assembly 100 is assembled arranging the housing 110 with its aperture 145 perpendicular to the direction of gravity, that is, vertical or substantially vertical, or in an assembly direction D, and further away to the ground than a second side of the housing 110 opposite a first side of the housing 110, and with the second side 186 of the PCB 180 further away to the ground than the first side 185 of the PCB 180.

The PCB 180 is then arranged within the aperture 145 of the housing 110 and with the lens assembly 170 closing the aperture 145 of the housing 110. A double side adhesive tape, not shown, is provided on the second side 186 of the PCB 180 and on an external surface of the aperture 145 of the housing 110. A double side adhesive tape is attached to the lens assembly 170 with the lens assembly 170 in turn attached to the housing 110 and the PCB 180.

A compression pressure may be applied if required to both the housing 110 and the lens assembly 170 in an assembly direction D, at least substantially perpendicular to lens assembly 170.

In this way, the above-mentioned parts of the blind spot indicator assembly 100 can be assembled in the same axis, i.e. in the assembly direction, in an automatic process.

**Claims**

1. A blind spot indicator assembly (100) for a motor vehicle, the assembly (100) comprising:

   - a housing (110) including a first side having an aperture (145) defined by a longitudinal dimension ($d_1$), the housing (110) also having an interior cavity (120) defined by an interior surface;
   - a lens assembly (170) arranged to close the aperture (145) of the housing (110); and
   - a printed circuit board (180) having a longitudinal dimension ($d_3$) and including at least two connection pins (200) extending laterally on a first side (185) of the printed circuit board (180);

   wherein

   when the connection pins (200) do not protrude outward an edge of the printed circuit board (180), the longitudinal dimension ($d_1$) of the aperture (145) is equal to or greater than the longitudinal dimension ($d_3$) of the printed circuit board (180), and
   when the connection pins (200) protrude outward an edge of the printed circuit board (180), the longitudinal dimension ($d_1$) of the aperture (145) is equal to or greater than a total dimension ($d_6$) that comprises the longitudinal dimension ($d_3$) of the printed circuit board (180) plus a projecting distance ($d_4$) the connection pins (200) project beyond the longitudinal dimension ($d_3$) of the printed circuit board (180).

2. The blind spot indicator assembly (100) of claim 1, wherein the housing (110) comprises a first portion (115a) where the printed circuit board (180) is placed, and a second portion (115b) extending laterally from the first portion (115a) and being configured to receive at least a first portion of a connector (300) to be plugged into the connection pins (200).

3. The blind spot indicator assembly (100) of claim 2, wherein the first portion (115a) of the housing (110) is configured to receive at least a length ($d_2$) of the connector (300) when plugged into the connection pins (200).

4. The blind spot indicator assembly (100) of claim 3, wherein the housing (110) includes a projection (210) extending from the interior surface towards the aperture (145), the projection (210) being formed at a length ($d_2$) apart from the second portion (115b) of the housing (110) for acting as an end stop for insertion of the connector (300).

5. The blind spot indicator assembly (100) of any of the preceding claims, wherein the length ($d_2$) of the connector (300) that can be inserted within the first portion (115a) of the housing (110) is at least 3 mm.

6. The blind spot indicator assembly (100) of any of the preceding claims, wherein the printed circuit board (180) is arranged between the connection pins (200) and the lens assembly (170).

7. The blind spot indicator assembly (100) of any of the preceding claims, wherein the second portion (115b) of the housing (110) is arranged spaced apart from the lens assembly (170).

8. The blind spot indicator assembly (100) of any of the preceding claims, wherein the second portion (115b) of the housing (110) includes a sealing means receiving portion (220) for receiving a sealing means (225) provided in the connector (300), the sealing means receiving portion (220) extending along a length ($d_5$) on an interior surface (125) of the second portion (115b) of the housing (110) to contact the connector (300) when inserted within the second portion (115b) of the housing (110).

9. The blind spot indicator assembly (100) of claim 8, wherein the length ($d_5$) of the sealing portion (220) is at least 2 mm.

10. Rear-view mirror assembly for motor vehicles, the mirror assembly comprising the blind spot indicator assembly (100) of any of the claims 1-9 and a connector (300) to be inserted into the second portion (115b) of the housing (110) of the blind spot indicator assembly (100) for electrical connection to the connection pins (200) of the printed circuit board (180) for powering supply to at least one or more light sources (190) in the printed circuit board (180).

11. The rear-view mirror assembly for motor vehicles of claim 10, wherein the assembly comprises a mirror head and a support arm for the attachment of the rear-view mirror to the vehicle,

wherein the mirror head comprises:

- a mirror housing (15);
- a reflective mirror sub-assembly including:

- a reflective mirror (12); and
- a back plate (18) to which the reflective mirror is attached; and

- a reflective mirror regulator for adjusting the orientation of said reflective mirror.

12. The rear-view mirror assembly for motor vehicles of claim 11, wherein the back plate (18) is shaped for allowing the blind spot indicator assembly (100) to be placed flush with the back plate (18) in relation to the reflective mirror (12).

13. Rear-view mirror assembly for motor vehicles of claim 11 or 12, wherein no portion of the back plate (18) is between the blind spot indicator assembly (100) and the reflective mirror.

14. Rear-view mirror assembly for motor vehicles of any of the claims 11-13, wherein a gap is defined between the second portion (115b) of the housing (110) and the back plate (18) towards the reflective mirror.

15. Rear-view mirror assembly for motor vehicles of any of the claims 10-14, wherein the connector is at least 10 mm long.

FIG. 1

FIG. 2

## FIG. 3a

## FIG. 3b

FIG. 4

Europäisches
Patentamt

European
Patent Office

Office européen
des brevets

# EUROPEAN SEARCH REPORT

**Application Number**

EP 23 38 3389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 209 776 314 U (SHANGHAI LVXIANG AUTOMOBILE PARTS CO LTD) 13 December 2019 (2019-12-13) * the whole document * | 1,2,4, 6-15 | INV. B60Q1/26 B60R1/12 |
| X | CN 216 281 163 U (SERANS AUTOMOBILE PART INDUSTRY LTD COMPANY IN HEDEAN DISTRICT OF FOSH) 12 April 2022 (2022-04-12) * the whole document * | 1,10 | |
| X | US 2012/147613 A1 (GOLDSCHMIDT SOENKE [DE] ET AL) 14 June 2012 (2012-06-14) * the whole document * | 1,2,4,8, 9,11-15 | |
| X | CN 216 761 619 U (CHANGZHOU NINE TRIPOD CAR INDUSTRY STOCK LTD COMPANY) 17 June 2022 (2022-06-17) * the whole document * | 1-3,5,6 | |
| A | WO 2006/031220 A2 (ANDERSON DARRYLL [US]; CERNASOV ANDREI [US]) 23 March 2006 (2006-03-23) * the whole document * | 1-15 | TECHNICAL FIELDS SEARCHED (IPC) B60Q B60R |
| A | US 2017/092134 A1 (KENDALL CRAIG [US] ET AL) 30 March 2017 (2017-03-30) * the whole document * | 1-15 | |
| A | CN 111 731 195 A (CHANGZHOU JIUDING AUTOMOBILE CO LTD) 2 October 2020 (2020-10-02) * the whole document * | 1-15 | |
| X | US 2016/078768 A1 (HUIZEN GREGORY A [US] ET AL) 17 March 2016 (2016-03-17) * the whole document * | 1,2, 11-15 | |

-/--

The present search report has been drawn up for all claims

| Place of search | Date of completion of the search | Examiner |
|---|---|---|
| Munich | 17 June 2024 | Berthommé, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

| | Europäisches<br>Patentamt<br>European<br>Patent Office<br>Office européen<br>des brevets | **EUROPEAN SEARCH REPORT** | **Application Number**<br><br>EP 23 38 3389 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | US 2021/197726 A1 (SHOOKS JEREMY R [US] ET AL) 1 July 2021 (2021-07-01)<br>* the whole document * | 1-15 | |
| A | WO 2021/141166 A1 (MEEKYUNGTEC CO LTD [KR]) 15 July 2021 (2021-07-15)<br>* the whole document * | 1-15 | |
| A | CN 209 756 944 U (MAGNA MIRRORS TAICANG AUTOMOTIVE TECH CO LTD)<br>10 December 2019 (2019-12-10)<br>* the whole document * | 1-15 | |
| X | US 2020/331390 A1 (RUEL JEFF R [US] ET AL)<br>22 October 2020 (2020-10-22)<br>* the whole document * | 1,6,<br>10-15 | |

TECHNICAL FIELDS
SEARCHED (IPC)

The present search report has been drawn up for all claims

| Place of search | Date of completion of the search | Examiner |
|---|---|---|
| Munich | 17 June 2024 | Berthommé, Emmanuel |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.............................................................................
& : member of the same patent family, corresponding
  document

EPO FORM 1503 03.82 (P04C01)

page 2 of 2

## ANNEX TO THE EUROPEAN SEARCH REPORT
## ON EUROPEAN PATENT APPLICATION NO.

EP 23 38 3389

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2024

| Patent document cited in search report | | Publication date | Patent family member(s) | | Publication date |
|---|---|---|---|---|---|
| CN 209776314 | U | 13-12-2019 | NONE | | |
| CN 216281163 | U | 12-04-2022 | NONE | | |
| US 2012147613 | A1 | 14-06-2012 | NONE | | |
| CN 216761619 | U | 17-06-2022 | NONE | | |
| WO 2006031220 | A2 | 23-03-2006 | NONE | | |
| US 2017092134 | A1 | 30-03-2017 | US | 9754489 B1 | 05-09-2017 |
| | | | US | 9847028 B1 | 19-12-2017 |
| | | | US | 2017092134 A1 | 30-03-2017 |
| | | | US | 2018174468 A1 | 21-06-2018 |
| | | | US | 2019139416 A1 | 09-05-2019 |
| | | | US | 2020135031 A1 | 30-04-2020 |
| | | | US | 2020342762 A1 | 29-10-2020 |
| | | | US | 2021256852 A1 | 19-08-2021 |
| | | | US | 2022189310 A1 | 16-06-2022 |
| CN 111731195 | A | 02-10-2020 | NONE | | |
| US 2016078768 | A1 | 17-03-2016 | US | 2016078768 A1 | 17-03-2016 |
| | | | US | 2017372614 A1 | 28-12-2017 |
| | | | US | 2020234592 A1 | 23-07-2020 |
| | | | US | 2022044568 A1 | 10-02-2022 |
| | | | US | 2023252900 A1 | 10-08-2023 |
| US 2021197726 | A1 | 01-07-2021 | NONE | | |
| WO 2021141166 | A1 | 15-07-2021 | NONE | | |
| CN 209756944 | U | 10-12-2019 | NONE | | |
| US 2020331390 | A1 | 22-10-2020 | EP | 3956870 A1 | 23-02-2022 |
| | | | US | 2020331390 A1 | 22-10-2020 |
| | | | WO | 2020214524 A1 | 22-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9663027 B
- US 9754489 B
- US 10614719 B